# EUROPEAN PATENT SPECIFICATION

(11) **EP 3 582 469 B1**
(45) Date of publication and mention of the grant of the patent: **07.07.2021**
(21) Application number: 19179851.1
(22) Date of filing: 13.06.2019
(51) Int. Cl.: H04L 29/06, H04W 12/06

(54) **AUTHENTICATION USING A MOBILE NETWORK OPERATOR SYSTEM**
AUTHENTIFIZIERUNG MIT EINEM MOBILNETZWERKBETREIBERSYSTEM
AUTHENTIFICATION AU MOYEN D'UN SYSTÈME D'OPÉRATEUR DE RÉSEAU MOBILE

(30) Priority: 14.06.2018 EP 18177669
(43) Date of publication of application: 18.12.2019
(73) Proprietor: Koninklijke KPN N.V., 3072 AP Rotterdam (NL)
(72) Inventor: Appelboom, Hubertus Mattheus, 1187 BW Amstelveen (NL)
(74) Representative: Wuyts, Koenraad Maria

(56) References cited:
- WO-A1-2017/003379
- V0 Gsm Association ET AL: "Mobile Connect MNO Implementation Requirements Mobile Connect MNO Implementation Requirements Version 0.1 [Publication Date] Security Classification: Non-confidential GSM Association Non-confidential Official Document PDATA.10 -Mobile Connect MNO Implementation Requirements", , 1 January 2016 (2016-01-01), pages 1-27, XP055370156, Internet Retrieved from the Internet: URL:http://www.gsma.com/latinamerica/wp-co ntent/uploads/2016/06/techdoc-MC-MNO_Imple mentation_Requirements-1.pdf [retrieved on 2017-05-08]
- ECKERSLEY PETER ED - WALTER DIDIMO ET AL: "How Unique Is Your Web Browser?", 21 July 2010 (2010-07-21), MEDICAL IMAGE COMPUTING AND COMPUTER-ASSISTED INTERVENTION - MICCAI 2015 : 18TH INTERNATIONAL CONFERENCE, MUNICH, GERMANY, OCTOBER 5-9, 2015; PROCEEDINGS; [LECTURE NOTES IN COMPUTER SCIENCE; LECT.NOTES COMPUTER], SPRINGER INTERNATIONAL PUBLISHING, CH, XP047423188, ISSN: 0302-9743 ISBN: 978-3-540-70543-7 * the whole document *

## Description

### FIELD OF THE INVENTION

The invention relates to a mobile network operator system, a mobile network operator method, and a computer readable medium.

### BACKGROUND

As the connected society grows, people have to remember an ever growing number of passwords. The growing number of passwords results in a growth in associated security problems. A forgotten password leads to an immediate loss of the service which is protected by the password, until the password is reset or recovered. It is estimated that 20 to 30 percent of all IT service desk volume is related to password problems; in particular to forgotten passwords. Moreover, problems with passwords may induce people to choose weak passwords or the same passwords for multiple sites.

Because of the value of passwords, attackers devise increasingly elaborate ways to obtain them. For example, an attacker may use so-called phishing attacks, in which a web-site is meticulously imitated in order to induce a user to enter his log-in credentials, e.g., his user name and password. After a user logs-in to the imitated web-site, the attacker will use the user-credentials to log-in to the real website.

One known way to address such problems is to incorporate a hardware token of some kind into the log-in procedure. Using the hardware token may be supplemented with other ways to verify a user's authenticity, e.g., using so-called two-factor authentication. One known system is Mobile connect, e.g., Mobile connect according to Mobile connect profile v1.1, or Mobile connect profile v2.0. Mobile connect uses a user's phone as his hardware token, or also referred to as his authentication device.

Mobile Connect is an authentication service facilitated by mobile network operators for online services. Mobile Connect is a protocol based on OpenID Connect that uses a mobile network identifier as the user ID for authentication; in particular Mobile Connect uses the Mobile Station International Subscriber Directory Number (MSISDN). The MSISDN are globally unique numbers issued by mobile network operators. Mobile Connect allows online service providers to send authentication requests securely to mobile users on participating mobile networks with the help of a discovery service, which determines to which mobile operator a mobile number belongs in real-time. For example, an online service located in one country can authenticate a Mobile Connect user using a mobile operator of another country.

In a Mobile Connect application, a service provider may incorporate a mobile connect activation button in its website or app, or the like, e.g., on a consumption device such as a desktop device or a mobile device. When a user clicks on the button, the user authenticates themselves using their mobile phone, e.g., using an authentication device. The service provider is informed of the successful authentication. In between the service provider, consumption device and authentication device, a mobile network operator provides the required authentication operations.

For example, this may work as follows. After the end-user clicks on the Mobile Connect button to access the service, an application at the service provider requests end-user operator details from a discovery service. The discovery service responds with the operator details. For example, the operator details may include the mobile network operator associated with the authentication device, e.g., mobile phone device, of the end-user. The application of the service provider makes an authentication request to the end-user operator, using OpenID with Mobile Connect profile. The operator sends an authentication request to the end-user's authentication device. The end-user authenticates themselves to the operator using their authentication device, e.g., the mobile device. The operator returns a user identifier specifying a specific end user to the service provider and access is granted. The user identifier used by Mobile Connect is referred to as a Pseudonymous Customer Reference (PCR). This is a unique identifier that references an end user pseudonymously.

Although using a hardware token increases the reliability of authentication, problems remain. In particular, protocols involving hardware tokens, including the protocol employed by Mobile Connect remain vulnerable to some types of phishing attack. There still is a need to increase protection of users against phishing websites. In addition, there is a need from service providers, e.g., websites, to ensure that users of a service are genuine users.

WO 2017/003379 A1 discloses a method performed by at least one server configured to authenticate a user for a web service login. The method comprises: generating a first one-time password (OTP) and a first identification number associated with the first OTP, based on a first request received from a first computing device, the first request related to the login and includes a user identification of the user; transmitting a notification to a second computing device, the notification includes the user identification, the first identification number, and a second identification number associated with the first request, the second computing device configured to establish a trust relationship with the server by authenticating digital credentials of the user which are associated with the user identification; transmitting the first OTP to the second computing device in response to receiving a second request from the second computing device, the second request based on the notification to enable the server to authenticate the second request; and authenticating the first request based on a second OTP transmitted from the first computing device, the second OTP corresponding to the first OTP received by the second computing device.

### SUMMARY OF THE INVENTION

The invention is defined in the appended claims. These and other problems are addressed though a mobile network operator system (MNO system) as defined in the claims. The MNO system may comprise
- a computer network interface for communicating with a consumption device over a computer network,
- a mobile network interface for communicating with an authentication device, the authentication device having a mobile network identifier,
- a processor.

The processor may be configured to
receive an initiating authentication request from the consumption device over the computer network, the initiating authentication request may comprise the mobile network identifier,

The processor may send a first authentication request to the authentication device associated with the mobile network identifier and receive a first authentication response from the authentication device in response to the first authentication request,

The processor may be further configured to send a second authentication request to the authentication device associated with the mobile network identifier, the authentication device and the consumption device may be operated for the consumption device to respond to the second authentication request with a second authentication response, the processor of the MNO system may be configured to receive the second authentication response from the consumption device in response to the second authentication request,

The processor may verify the first authentication response and the second authentication response and may verify that the second authentication response and the initiating authentication request were received from the same consumption device,

The processor may send an authentication success message.

According to the prior art, when a user interacts with a fake site of a phisher, the phisher may send out an authentication request in its name. When the latter is done in approximately real time, then this may result in a message on the authentication device of the user at the time that the user expects to receive such a message. He may thus validate the message, and unwittingly allow the attacker access to the service in his name. In an embodiment, a path is created back from the authentication device to the consumption device so that the MNO system can verify that the attempt to access the service and the attempt to authenticate come from the same device. However, if verification fails, this may indicate tampering by an attacker, e.g. abuse by a phishing website. The authentication device may also be referred to as an authenticator.

In an embodiment, the second authentication request comprises an MNO computer network address, the second authentication response being received at the MNO computer network address. For example, the MNO computer network address may be an URL of the MNO system. Passing the information from the authentication device to the consumption device may involve a user interaction with the consumption device, for example, the user may have to open a web-page following instructions in the second authentication request.

In an embodiment, fingerprints may be used to selectively use the second authentication request. For example, by storing mobile network identifiers with the device fingerprints of consumption devices that were successfully authenticated by them, the system can verify if a device fingerprint is currently associated with the mobile network identifier upon receiving the initiating authentication request, and, if not, sending the second authentication request. On the other hand, if a device fingerprint is currently associated with the mobile network identifier, then sending the second authentication request may be omitted. In this way most of the advantages of the second authentication request are retained without forcing extended authentication on a user each time authentication is needed.

The MNO system is an electronic system and may be an electronic device.

An aspect of the invention is an authentication device for enabling authentication of a consumption device. The authentication device may comprise
- a mobile network interface for communicating with an MNO system, the authentication device having a mobile network identifier,
- a processor.
- an output interface

The processor may receive a first authentication request from the MNO system and may send a first authentication response to the MNO system in response to the first authentication request,

The processor may be further configured to receive a second authentication request from the MNO system, the second authentication request comprising authentication input.

The output interface may be configured to output the authentication input.

The authentication device and the consumption device may be operated for the consumption device to respond to the second authentication request with a second authentication response, the MNO system may be configured to receive the second authentication response from the consumption device in response to the second authentication request, thereby enabling authentication of the consumption device.

The authentication input may be used as input on the consumption device. A user may operate the authentication device and the consumption device. For example, the authentication device map output the authentication input to a display or a speaker of the authentication device, and the user may enter it via a keyboard, touchscreen, camera, microphone or other input mechanism on the consumption device. In another example, the authentication input may be provided to the consumption device via a wireless interface, preferably providing a short-range direct connection, e.g. Bluetooth, NFC.

An aspect of the invention concerns an MNO method. The method described herein may be applied in a wide range of practical applications. Such practical applications include authentication for servers, e.g., file servers, web-servers, applications, e.g., banking applications, online application, e.g., word processing, games, and the like. Embodiments may also be used to authenticate for local applications, e.g., applications running on the consumption device, which may not require on-line access outside the authentication process.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the invention provides a method of making the computer program available for downloading. This aspect is used when the computer program is uploaded into, e.g., Apple's App Store, Google's Play Store, or Microsoft's Windows Store, and when the computer program is available for downloading from such a store.

### BRIEF DESCRIPTION OF THE DRAWINGS

Further details, aspects, and embodiments of the invention will be described, by way of example only, with reference to the drawings. Elements in the figures are illustrated for simplicity and clarity and have not necessarily been drawn to scale. In the Figures, elements which correspond to elements already described may have the same reference numerals. In the drawings,
Figure 1a schematically shows an example of an embodiment of an authentication system,
Figure 1b schematically shows an example of an embodiment of a combined consumption and authentication device,
Figure 2a schematically shows an example of an embodiment of an authentication system,
Figure 2b schematically shows an example of an embodiment of an authentication system,

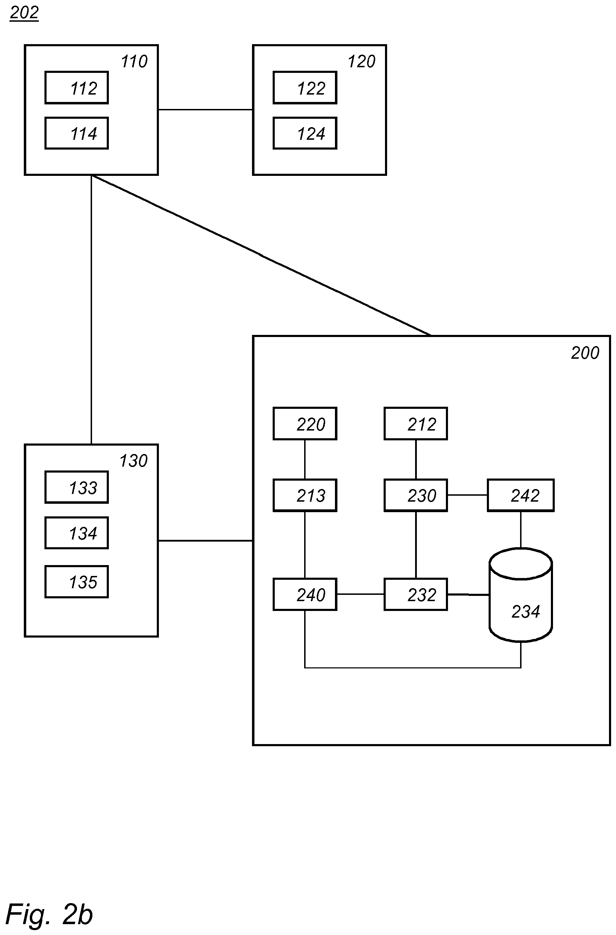

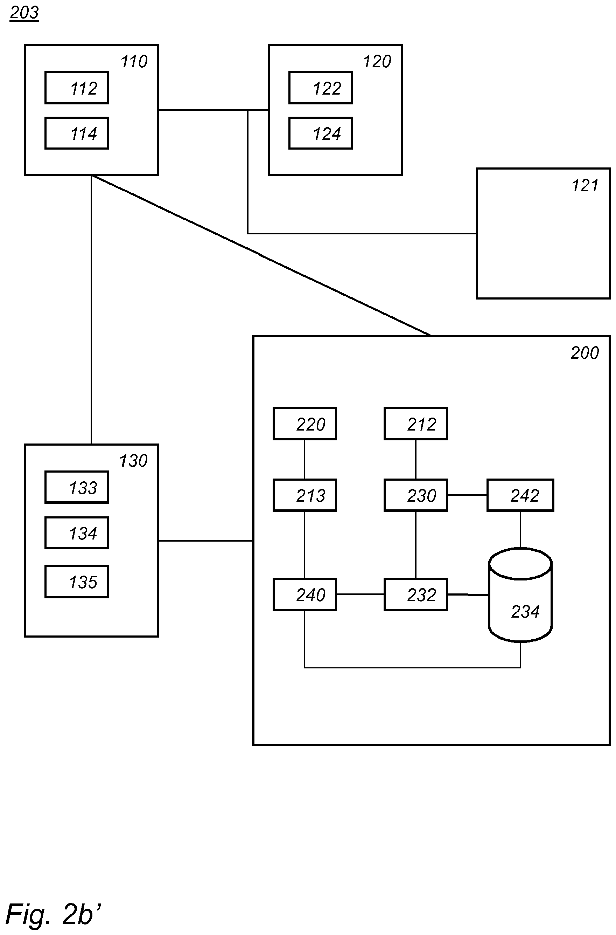

Figure 2b' schematically shows an example of an embodiment of an authentication system,

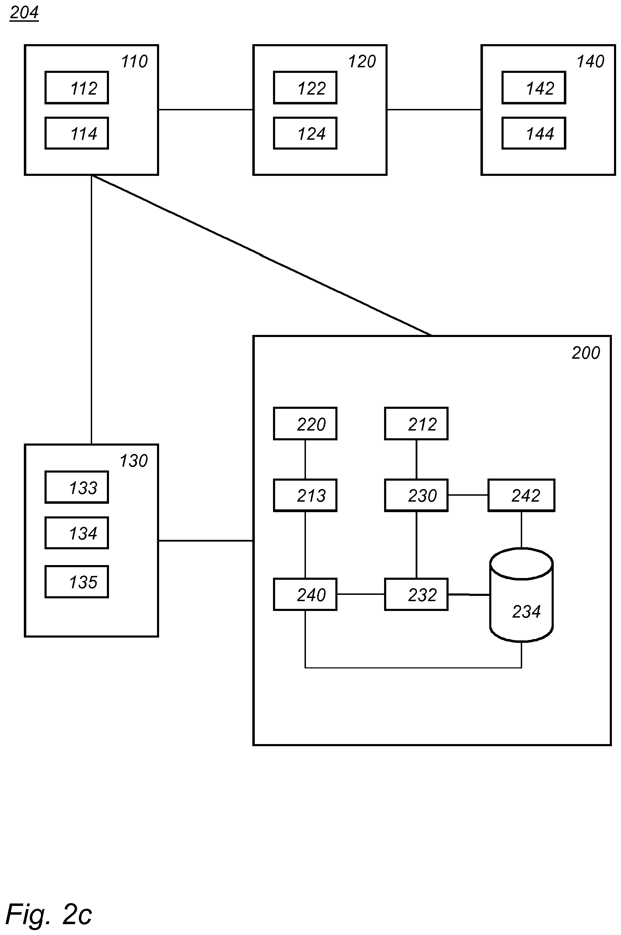

Figure 2c schematically shows an example of an embodiment of an authentication system,

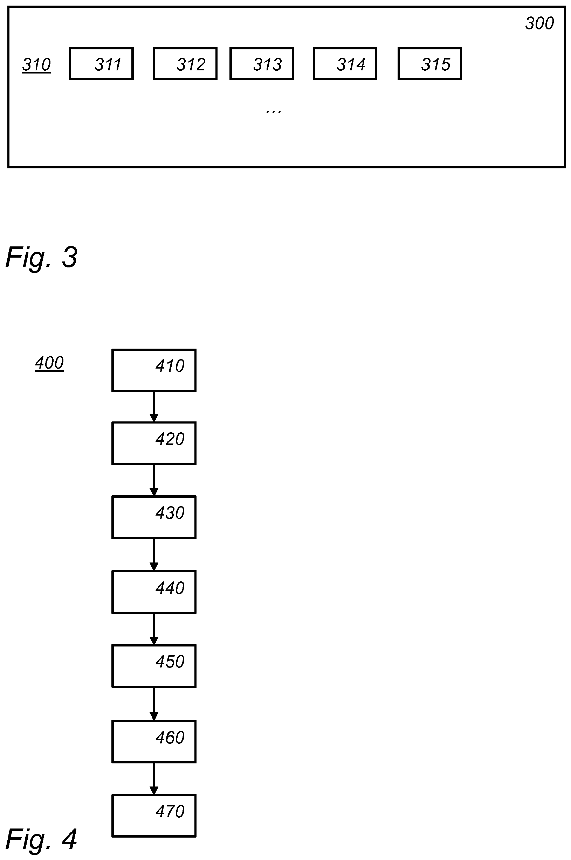

Figure 3 schematically shows an example of an embodiment of an authentication database,
Figure 4 schematically shows an example of an embodiment of an authentication method,

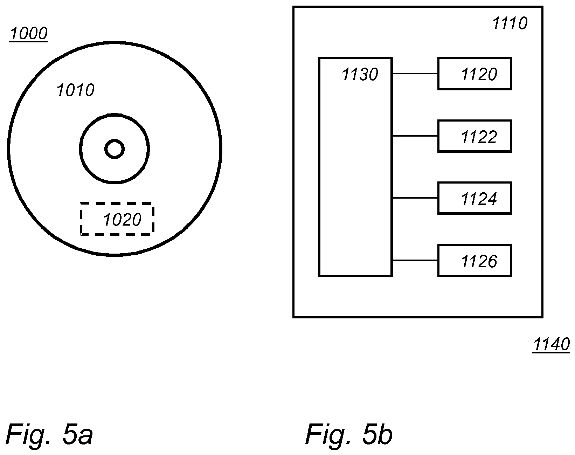

Figure 5a schematically shows a computer readable medium having a writable part comprising a computer program according to an embodiment,
Figure 5b schematically shows a representation of a processor system according to an embodiment.

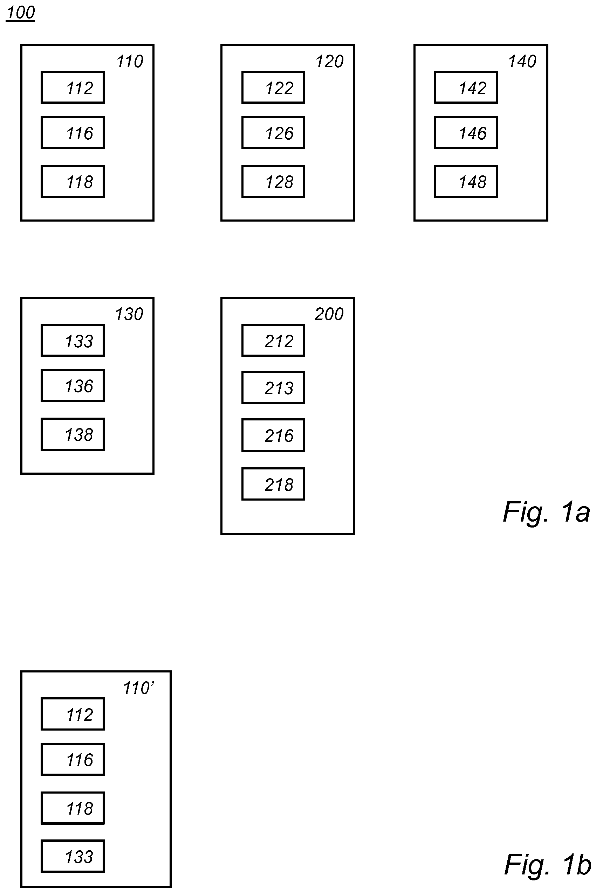

### List of Reference Numerals in figure 1-3, 5a, 5b:

- 100: an authentication system
- 110: a consumption device
- 112, 122, 142, 212: a computer network interface
- 116, 126, 146, 136, 216: a processor
- 118, 128, 148, 138, 218: a memory
- 133,213: a mobile network interface
- 114: a computer network application
- 120: a service provider device
- 121: a further service provider device
- 124: a computer network server
- 130: an authentication device
- 134: a first authentication unit
- 135: a second authentication unit
- 140: a discovery service system
- 144: a discovery service responder
- 200: a mobile network operator system (MNO system)
- 201, 202, 203, 204: an authentication system
- 220: a first authentication unit
- 230: a fingerprint generator
- 232: a fingerprint checker
- 234: an authentication database
- 240: a second authentication request unit
- 242: a second authentication verification unit
- 300: an authentication database
- 310: a record
- 311: a fingerprint
- 312: a mobile network identifier
- 313: first authentication information
- 314: second authentication information
- 315: a user identifier
- 1000: a computer readable medium
- 1010: a writable part
- 1020: a computer program
- 1110: integrated circuit(s)
- 1120: a processing unit
- 1122: a memory
- 1124: a dedicated integrated circuit
- 1126: a communication element
- 1130: an interconnect
- 1140: a processor system

### DETAILED DESCRIPTION OF EMBODIMENTS

While this invention is susceptible of embodiment in many different forms, there are shown in the drawings and will herein be described in detail one or more specific embodiments, with the understanding that the present disclosure is to be considered as exemplary of the principles of the invention and not intended to limit the invention to the specific embodiments shown and described.

In the following, for the sake of understanding, elements of embodiments are described in operation. However, it will be apparent that the respective elements are arranged to perform the functions being described as performed by them. Further, the invention is not limited to the embodiments, and the invention lies in each and every novel feature or combination of features described herein or recited in mutually different dependent claims.

There is a desire to increase protection of users against phishing websites. In addition, there is a desire from service providers, e.g., websites, to ensure that users of a service are genuine users. **Figure 1a** schematically shows an example of an embodiment of an authentication system 100, with various actors, some of which are optional. Authentication system 100 shows a consumption device 110 and a service provider device 120. For example, the consumption device may be configured to use a service of service provider device 120 over the computer network. For example, consumption device 110 may be a desktop device, e.g., a desktop computer. For example, consumption device 110 may be a mobile and/or wireless device, e.g., a mobile phone, tablet, and the like. For example, service provider device 120 may be a server, e.g., a web server, a file server, etc. The user of consumption device 100 has access to an authentication device 130. Authentication device 130 is used as a hardware token to increase trust in the authenticity of the user. For example, when a user proves that he has access to authentication device 130 this proves at least to a degree that the user is who he says he is, or at least that he is the same user as the one who used authentication device 130 at a previous occasion. Authentication device 130 may be a mobile device, e.g., a mobile phone, etc. Authentication device 130 may be the same device as consumption device 110; for example, both may be a mobile phone. Authentication device 130 may be a different device than consumption device 110; for example, authentication device 130 may be a phone, while consumption device 110 may be a desktop computer, a tablet, etc.

Authentication services are provided by a mobile network operator system 200 (MNO system 200). A mobile network operator or MNO, also known as a wireless service provider, wireless carrier, cellular company, or mobile network carrier, is a provider of wireless communication services. The MNO controls the wireless network infrastructure using part of the radio spectrum to provide wireless communication to devices such as authentication device 130. MNO system 200 may be implemented in a single device, e.g., a device configured to control the wireless infrastructure, e.g., to send and receive messages. MNO system 200 may also be implemented as a combination of devices, e.g., distributed devices, that cooperate to provide the wireless communication. For example, the mobile network may be a broadband cellular network, e.g., a 3G, 4G or 5G network.

As is further explained below, consumption device 110, service provider 120, MNO system 200 and authentication device 130 cooperate to authenticate the user of consumption device 110 to service provider device 120. Optionally, system 100 may comprise a discovery service system 140. Discovery service system 140 may be used by service provider device 120 to find the correct MNO system 200 associated with authentication device 130. A discovery service is useful for example, if the mobile network identifier is to be kept secret from the service provider, e.g., by doing authentication through the discovery service or by encrypting the mobile network identifier. Discovery service system 140 may be implemented in one or more discovery service devices.

Discovery service system 140 is not always needed. For example, service provider 120 may be configured to work only with one particular MNO system 200; for example, in case device 120 hosts the website of the mobile operator corresponding to MNO system 200. For example, the latter embodiment may be used by clients of MNO system 200, e.g., to control their own settings, profile and the like. Service provider 120 does not need a discovery service system 140 if the information is obtained in other ways; for example provided by consumption device 110 or derived from the mobile network identifier. Service provider 120 does not need a discovery service system140 if the number of supported MNO providers is relatively small. In that case, service provider 120 may simply try all possible MNO providers.

Consumption device 110, service provider device 120, discovery service system 140, and MNO system 200 comprise a computer network interface: computer network interfaces 112, 122, 142, 212 respectively. The computer network interfaces allow these devices to communicate over the computer network. The computer network may be an internet, an intranet, a LAN, a WLAN, etc. Typically, the computer network will be the Internet. The computer network may be wholly or partly wired, and/or wholly or partly wireless. For example, the computer network may comprise Ethernet connections. For example, the computer network may comprise wireless connections, such as Wi-Fi, ZigBee, and the like. The devices comprise a communication interface which is arranged to communicate as needed with other devices of system 100 that are connected to the computer network. For example, the communication interface may comprise a connector, e.g., a wired connector, e.g., an Ethernet connector, or a wireless connector, e.g., an antenna, e.g., a Wi-Fi, 4G or 5G antenna. Computer network 150 may comprise additional elements, e.g., a router, a hub, etc. In device 110, the communication interface 112 may be used to communicate with service provider device 120 to obtain the services, e.g., to browse a website, interact with an on-line application, etc. Communication over the computer network are digital communications, e.g., in the form of multiple digital messages.

Authentication device 130 and MNO system 200 comprise a mobile network interface: mobile network interface 133 and 213 respectively. The mobile network interfaces allow communicating over the mobile network. For example, mobile network interface may be a proprietary communication interface of the wireless network controlled by MNO system 200. For example, the mobile network interface may be configured to send and/or receive SMSs (short message service), service messages, and the like. There are several alterative protocols that can be used, such as USSD, HTTP header. Embodiments may also use an IP interface, e g., when a smartphone app is used as authentication device. In an embodiment, the authentication device may be a SIM applet, e.g., using a binary encrypted SMS for communicating and/or SMS URL/OTP.

Software on consumption device 110 used to access service provider device 120 does not have access to messages sent from MNO system 200 to authentication device 130 through their mobile network interfaces; not even if consumption device 110 and authentication device 130 are the same device. For example, software used to control computer network interface 112 may be distinct from software used to control mobile network interface 133. For example, computer network interface 112 and mobile network interface 133 may support different communication protocols, e.g., http, TCP/IP, etc., versus the SS7 protocol, MAP messages, and the like.

Note, if devices 110 and 130 are the same, then the communication over the computer network interface and the mobile network interface may both be built on top of a low level protocol, e.g., on top of the wireless network maintained by MNO system 200. However, software that operates on the level of the communication interface, e.g., a web browser used to access service provider device 120 does not receive access to messages outside its own protocol, e.g., the software may be shielded from mobile network messages by an operating system of device 110/130, which may provide access only to part of the information exchanged on the lower level. In any case, intercepting or altering communication between consumption device 110 and service provider device 120 is independent from likewise compromising the communication between MNO system 200 and authentication system 130. For example, in an embodiment devices 110 and 130 are a single device, e.g., a mobile device, wherein a browser is configured to access communication interface 112 to communicate with service provider device 120, without access to messages received at device 110 from MNO system 200 received over mobile network interface 133. Figure 1b shows an example, of a combined consumption and authentication device, e.g., a mobile device, such as a mobile phone, tablet, or the like. Figure 1b is further described below.

In the embodiment of the authentication system shown in figure 1a, the devices 110, 120, 140, 130, 200 each comprise a processor: processors 116, 126, 146, 136 and 216. The devices 110, 120, 140, 130, 200 each comprise a memory: memory 118, 128, 148, 138 and 218. For example, the memory comprises computer instructions arranged for execution by the processor. The memory may also comprise data on which the processor acts.

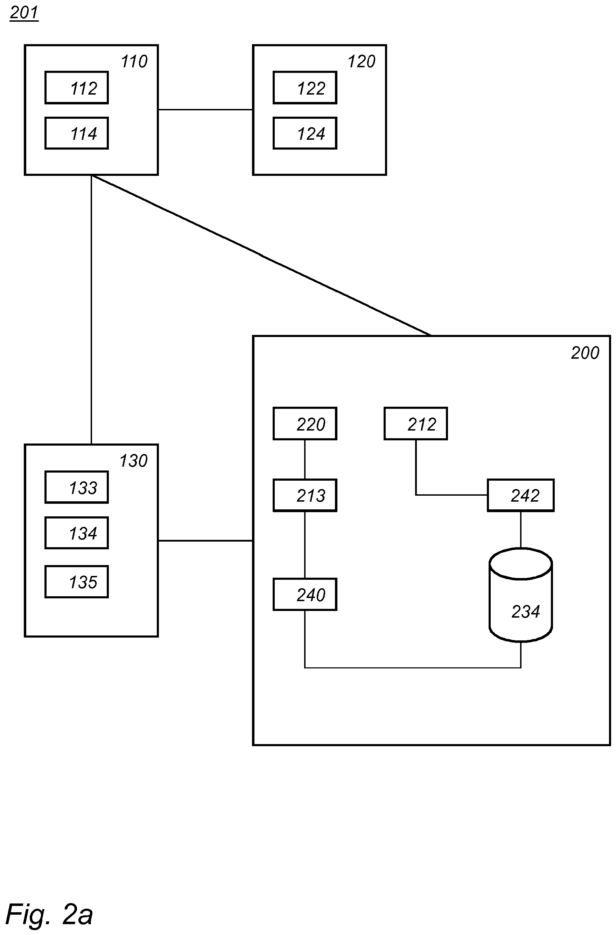

The execution of the authentication system on the various devices is implemented in a processor, e.g., a processor circuit, examples of which are shown herein. Figures 2a-2c show functional units that may be functional units of the processor. For example, figures 2a-2c may be used as a blueprint of a possible functional organization of the processor circuit. The processor circuit is not shown separate from the units in figures 2a-2c. For example, the functional units shown in the figures may be wholly or partially implemented in computer instructions that are stored in the memory of the device, e.g., in an electronic memory of the device, and are executable by a microprocessor of the device. In hybrid embodiments, functional units are implemented partially in hardware, e.g., as coprocessors, e.g., crypto or communication coprocessors, and partially in software stored and executed on the device.

**Figure 2a** schematically shows an example of an embodiment of an authentication system 201. Authentication system 201 comprises a consumption device 110, a service provider device 120, an authentication device 130 and an MNO system 200. These devices may be implemented as suggested for figure 1a or 1b.

Consumption device 110 is arranged to use a service of service provider device 120 using computer network interface 112. For example, consumption device 110 may comprise a computer network application 114. Computer network application 114 may be a web browser, an app, or the like. For example, computer network application 114 may be arranged to exchange information with a web server. Instead or in addition to application 114, consumption device 110 may comprise other software to interact with service provider device 120, e.g., one or more apps. Service provider device 120 comprises a computer network server 124 arranged to cooperate with application 114, e.g., it may be a web server. Computer network server 124 may be arranged to cooperate with said software on device 110 over the computer network. Before using at least some of the services of service provider device 120, it is required that a user of consumption device 110 authenticates to the service provider device 120.

To log-in to service provider device 120, the user of consumption device 110 uses a mobile network identifier of authentication device 130, e.g., its phone number or MSISDN as part of its credentials. The credentials used to log-in to service provider device 120 may comprise additional information, e.g., one or more of a username, a password, a biometric, etc. However, in an embodiment logging-in only requires a mobile network identifier. Instead of using the plain mobile network identifier, consumption device 110 may also log-in with a mobile network identifier in encrypted form; encrypted such that MNO system 200 can decrypt it, e.g., encrypted with a symmetric key to which MNO system 200 has access; or encrypted with a public key of MNO system 200, so that MNO system 200 can decrypt it with a corresponding private key to which it has access. Encrypting the mobile network identifier may be done together with a salt. The service provider device 120, e.g., computer network server 124 sends an initiating authentication request to MNO system 200 via a redirect on consumption device 110. As a result of the redirect, the initiating authentication request may originally come from service provider device 120, but arrives at MNO system 200 via consumption device 110. The initiating authentication request comprises the mobile network identifier, e.g., in plain or encrypted.

The mobile network identifier identifies the authentication device on the mobile network. For example, it may be a number which identifies a mobile phone, e.g., internationally. For example, the mobile network identifier may be a Mobile Station International Subscriber Directory Number (MSISDN). Other examples may be the International Mobile Subscriber Identity (IMSI) or a SIM card ID (ICCID). Also other identifiers may be used as mobile network identifier, as long as the mobile network can uniquely relate the identifier to an authentication device. E.g. once the MNO system has reliably established and stored the relation between a user name, login name, nick name, e-mail address and/or social media ID such as Facebook ID or Twitter ID, and the authentication device, any of these can be used as the mobile network identifier.

In an embodiment, an alias is used as mobile network identifier. For example, in the latter case, the user may indicate with which MNO the authentication needs to be done, e.g., in an interface provided on the consumption device and/or authentication device.

As an alternative consumption device 110, e.g., application 114, may send the initiating authentication request directly to MNO system 200, possibly before entering credentials at service provider device 120, or possibly even before contacting service provider device 120. Also in this case, the initiating authentication request arrives at MNO system 200 from consumption device 110. For example, in this case, after successful authentication has completed, an authentication token may be provided to consumption device 110. The authentication token can then be used to log-in to service provider device 120. An authentication token may comprise a digital signature of MNO system 200, and a time-stamp or validity period, and a user identifier, e.g., the mobile network identifier, etc. The authentication token may be part of an authentication success message. In both options of sending the initiating authentication request, the token may also be sent directly to service provider device 120. Using a redirect to send the initiating authentication request is preferred.

MNO system 200 receives the initiating authentication request from the consumption device over the computer network through the computer network interface 212. The initiating authentication request comprises the mobile network identifier of authentication device 130. The initiating authentication request triggers an authentication action of the MNO system. MNO system 200 comprises a first authentication unit 220. First authentication unit 220 is configured to send a first authentication request to authentication device 130 with the mobile network identifier. For example, MNO system 200 is configured to control the wireless communication system associated with the authentication device 130, using the mobile network identifier, first authentication unit 220 can generate the first authentication request and arrange for the request to be communicated wirelessly to authentication device 130. For example, the first authentication request may be sent by SMS, or by some other wireless protocol.

Authentication device 130 receives the first authentication request through mobile network interface 133. Authentication device 130 comprises a first authentication responder 134 configured to respond to the first authentication request. For example, first authentication responder 134 may be configured to send a response automatically, possibly without involving the user of device 130; preferably, the response is first approved by the user though. The response may only acknowledge that the authentication request was received, but may also comprise more. For example, the response may comprise a response in a challenge-respond protocol, e.g., to prove that device 130 has access to a secret, e.g., a secret shared with MNO system 200. The response may also include a nonce included in the first authentication request by MNO system 200, e.g., to prove that the response was created timely, and not, say, a replay.

In an embodiment, sending the response involves the user of the authentication device. For example, the user may be required by first authentication responder 134 to agree to the authentication, e.g., by pressing a button or swiping on a display, etc. For example, the response may comprise other authentication means, e.g., a password, e.g., a pin code or swipe diagram, entered by the user after receiving the first authentication request. The other authentication means may be verified by MNO system 200 and/or by device 130 itself.

Requesting consent from the user of device 130 may comprise displaying a message of service provider device 120, e.g., included in the redirect sent from service provider device 120 through consumption device 110. For example, the message may inform the user what particular transaction he/she is authenticating, say a financial transaction, a delete operation, or the like.

After receiving the desired input of user of device 130, if any, the first authentication responder 134 sends a first authentication response to MNO system 200 through mobile network interface 133 and 213. The first authentication response is verified at MNO system 200 by first authentication unit 220. For example, first authentication unit 220 may verify one or more of the following: that a first authentication message was indeed sent out to authentication device 130, that it contains the correct credential of the user, e.g., pin-code or password, that it contains a correct response to a challenge, etc. Note that the first authentication request and the first authentication response are sent and received through the mobile network.

In an embodiment, authentication may be done local in the device, and only the result of the authentication is communicated to first authentication unit 220. In that case, a password, such as a pin code, need never leave the authentication device.

To improve authentication, e.g., to verify the link between the consumption device 110 and the authentication device 130, MNO system 200 may perform further steps. MNO system comprises a second authentication request unit 240 configured to send a second authentication request to the authentication device associated with the mobile network identifier. For example, authentication device that is identified by the mobile network identifier is the authentication device that is associated with it. For example, in case the mobile network identifier is the MSISDN, then the associated authentication device is the mobile device configured for that MSISDN.

The second authentication request is received at device 130 through mobile network interface 133, but the response to the second authentication request is not sent from authentication device 130. For example, authentication device 130 may comprise a second authentication unit 135 configured to process the second authentication request. For example, second authentication unit 135 may be configured to receive the second authentication request and, e.g., to display all or part of it on a display of device 130, or otherwise transmit it to consumption device 110.

In an embodiment, the first authentication unit 134 and/or the second authentication unit 135 are implemented as an application on the SIM card of the phone, e.g., of the authentication device.

In an embodiment, the second authentication request may comprise instructions for the user of authentication device 100 to register consumption device 110. The instructions may instruct the user to send the second authentication response from the consumption device. This can be done, for example, by giving instructions on the mobile phone. The actions that the end user must do on the consumption device 110 trigger a second device detection, which can only be detected by the MNO. This can be, for example, opening a second browser screen, and going to a specific URL where the device is detected. Manually, opening a particular web-page improves security since it is a communication channel that an attacker such as a phisher with a fake site does not see.

In an embodiment, the second authentication request may comprise an authentication input. The authentication device may be configured to output the authentication input. For example, the authentication device may comprise an output interface configured to output the authentication input. For example, the output interface may be a display. For example, the authentication input may comprise user instructions.

For example, in an embodiment the second authentication response is sent in response to a user interaction with the consumption device in response to receiving the second authentication request at the authentication device. The interaction may be a manual interaction. For example, the second authentication request may instruct the user to manually type a particular web-site address in a new browser window. In an embodiment, the interaction is performed with other software than a web-browser. For example, the second authentication request may instruct the user to start a particular software program which contacts MNO system 200 over the computer network. Thus, sending the second authentication response from the consumption device is initiated by a user of the consumption device and the authentication device in dependence upon the second authentication request. The second authentication request may comprise instructions for a user of the authentication device and of the consumption device. The instructions instruct the user to send the second authentication response from the consumption device. Authentication device 130 may be configured to display the instructions, e.g., by displaying part or all of the second authentication request.

In an embodiment, the second authentication request comprises an MNO computer network address. The second authentication response is received at the MNO computer network address, e.g., at computer network interface 212. Second authentication verification unit 242 is configured to receive a second authentication response from the consumption device in response to sending the second authentication request to authentication device 130. MNO system 200 comprises a second authentication verification unit 242 configured to verify the response received from device 110. The computer network address may be a URL, an IP address, and the like.

In an embodiment, the MNO device 200 uses multiple URLs from which the specific URL is selected, e.g., randomly. When the second authentication response is verified, it may then additionally be verified that the second authentication response was sent to the correct URL. This further improves security.

In an embodiment, second authentication request unit 240 may be configured to generate random data, e.g., a random string and include the data in the second authentication request. The user of devices 110 and 130 may view the random data on authentication device 130 and enter the random data in the second authentication response at device 110. For example, the user may be instructed to open a web-site of MNO system 200; at the web-site the user can enter the random data. The user may be required to enter additional information, e.g., the mobile network identifier. For example, the random data may be included in an URL of MNO system 200. Instead or in addition to random data, the second authentication response may comprise information regarding the transaction, e.g., a timestamp, service provider, transaction value, etc.

For example, in an embodiment the second authentication request comprises a URL, and optionally random data, e.g., a random string. The URL and random data are displayed on device 130. The user opens a browser window, e.g., using application 114, or another browser, and navigates to the URL or website, etc. At the URL, e.g. on the website or as URL parameters, etc., the user enters the random data and the mobile network identifier of device 130. Instead of requiring the mobile number, only a random data may be used, though this may require more random data. For example, in the latter case the length of the string may be selected so that the string is likely to be unique given the number of log-ins in a particular period.

Instead of manual transfer of information from authentication device 130 to consumption device 110, electronic means may be used. For example, the authentication device 130 and the consumption device may both comprise an electronic interface, which is different from the computer network interface. For example, the electronic interface may be wireless, e.g., Bluetooth, NFC, etc., or wired, e.g., USB, Firewire, etc. For example, authentication device 130 may transfer the second authentication request to the consumption device 110 through the electronic interfaces, e.g., to responding software installed on device 110. The responding software then sends the second authentication response to MNO system 200. The responding software may generate and send the second authentication response. The responding software may be application 114, but may be a separate program. For example, an operating system of device 110 may separate the responding software from application 114.

Second authentication verification unit 242 is configured to verify the second authentication response. Note that in an embodiment the second authentication response arrives through computer network interface 212 rather than through mobile network interface 213. MNO system 200 may be configured to verify that the second authentication response and the initiating authentication request were received from the same consumption device. For example, this may comprise verifying that they were received from the same computer network address, e.g., from the same IP address. In an embodiment, a fingerprint of the devices sending the two messages may be compared. The fingerprint may be a device fingerprint, such as a browser fingerprint.

Alternatively, the first authentication response may arrive through the computer network interface 212. For example, authentication device 130 may send a digital message over a computer network in response to receiving the first authentication request. The second authentication response may be sent to a website under control of MNO system 200, which in turn forwards it to MNO system 200. The latter may use computer network interface 212, but could use an alternative interface, e.g., mobile network interface 213. In an embodiment, the authentication device and the consumption device may be the same device, in this case, the detection of the user response to the second authentication request (e.g. opening a website) may be done on the level of the mobile network as well as on the level of the computer network. In the latter case, the first and second authentication responses may arrive through mobile network interface 213; note that in this case, one may also detect on the level of a computer network protocol, which may be running on top of the mobile network protocol.

In an embodiment, if the first authentication response and the second authentication response are correct, an authentication success message may be sent. However, other embodiments such as discussed below require additional conditions for an authentication success message. The authentication success message may comprise an authentication token that cryptographically ensures that MNO system 200 successfully performed the authentication protocol with devices 110 and 130. The authentication success message may be sent over the computer network to consumption device 110 or to the service provider device 120. The latter is preferable, for example, the authentication success message may be sent to service provider device 120 via a redirect at consumption device 110.

In an embodiment, the service provider may specify the URL to be used in the initiating authorization request. For security reasons, the redirect URLs which are allowed for a specific service provide may be registered beforehand in the MNO system, so the MNO can check whether the URL received is a valid one.

In case one or more of the verifications do not succeed an authentication failure message may be returned. For example, the authentication failure message may include the verification test that failed. For example, the authentication failure message may include that the initiating authentication request and the second authentication response were not received from the same device.

MNO system 200 may comprise an authentication database 234 that associates the mobile network identifier with a user identifier. The authentication success message may comprise the user identifier. For example, the user identifier may be a Pseudonymous Customer Reference (PCR). For example, MNO system 200 may store a user identifier that is specific for a mobile network identifier. The user identifier may also be specific for the mobile network identifier and the particular service provider. That latter improves privacy. The user identifier may be derived from the mobile network identifier and/or a service provider address, but may also be randomly chosen and stored in database 234. Interestingly, by changing the mobile network identifier in database 234, a given user name may be transferred to a new mobile network identifier. Database 234 may be used to store additional information, e.g., information regarding pending or completed first and second authentication requests.

**Figure 2b** schematically shows an example of an embodiment of an authentication system 202. System 202 is similar to system 201 but has additional functions to improve security. MNO system 200 comprises a fingerprint generator 230. Fingerprint generator 230 is configured to obtain a fingerprint for the devices from which the initiating authentication request and the second authentication response are received. If there are no problems, both these messages should be received from the same device. However, if an attacker is involved these messages could come from different devices.

In an embodiment, the fingerprints may be received together with the initiating authentication request and the second authentication response. Alternatively, the initiating authentication request and the second authentication response may comprise information from which a fingerprint is constructed. Alternatively, fingerprint generator 230 may engage in a protocol with the devices sending the initiating authentication request and the second authentication response to obtain fingerprint information, and derive the fingerprints therefrom. A fingerprint may comprise a computer network address, e.g., an IP address of the consumption device.

MNO system 200 may comprise a fingerprint checker 232 configured to match the two fingerprints generated by the fingerprint generator 230. Matching two fingerprints may require an exact match; however matching the fingerprint may allow some differences to take into account that slight differences may occur between receiving the two fingerprints.

The fingerprint may comprise information collected about the sending-device to identify the device. The fingerprint may be, e.g., a so-called device fingerprint or a browser fingerprint. For example, a browser fingerprint may comprise web browser configuration information; the browser configuration may include the browser version, primary language, time-zone, and the like. For example, to obtain fingerprinting information a client-side script may be used. A fingerprint may be obtained by assimilation of such fingerprinting information into a single string. Fingerprinting is known per-se and described, e.g., in "How Unique Is Your Web Browser?" by Peter Eckersley, or "(Cross-)Browser Fingerprinting via OS and Hardware Level Features" by Yinzhi Cao, et al. For example, fingerprinting code may be incorporated in the web-page on which the user makes the initial contact with service provider device 120, e.g., where he logs-in with his mobile network identifier. Fingerprinting code may also be incorporated in a web-page served by MNO system 200 in response to the user accessing a URL incorporated the second authentication request.

MNO system 200 thus may employ three criteria before sending the authentication success message.
- The first authentication response is expected and correct
- The second authentication response is expected and correct
- The second authentication response and the initiating authentication request have the same fingerprint.

In an embodiment, the fingerprint of consumption device 110 is stored in database 234. Database 234 may store mobile network identifiers and the corresponding device fingerprints of consumption devices. Storing fingerprint information of consumption devices may be used to improve security while reducing the additional burden to the user. For example, second authentication request unit 240 may be configured to only generate a second authentication request if the fingerprint obtained from the initiating authentication request is not stored in database 234. For example, second authentication request unit 240 may be configured to verify if a device fingerprint obtained from the initiating authentication request is currently associated with the mobile network identifier in the initiating authentication request. If it is, then second authentication request unit 240 may decide to forego sending a second authentication request. In that case successful authentication can be achieved with only a correct response to the first authentication request. If the finger print is unknown then second authentication request unit 240 may send the second authentication request indicating that a second authentication response is needed from the consumption device for authentication. For example, in an embodiment, the authentication success message is sent if the first authentication response is successfully verified and a device fingerprint is currently associated with the mobile network identifier, without sending the second authentication request.

In this way, additional assurance is obtained especially in the case where a new consumption device is used. On the other hand, if a familiar consumption device is used, this in itself provides a level of authentication so that the second authentication request can be omitted.

In an embodiment, there may be additional circumstances in which a second authentication request is used and verified even though no new fingerprint is used. For example, the service provider device 120 may request additional authentication, e.g., because a particular important transaction is attempted, e.g., a large financial transaction, or, e.g., deletion of an account, etc. As other examples, a second authentication may be performed periodically, e.g. once per day, at random, every x transactions, and/or when there is no previous relation between the service provider and the user, or the service provider is in a different country than the user.

In an embodiment, the second authentication response may itself be a trigger for an authentication process as the first authentication request. For example, the MNO system may be configured, e.g., a processor of the MNO system may be so configured, to send a third authentication request to the authentication device associated with the mobile network identifier in response to receiving the second authentication response, and to receive a third authentication response from the authentication device in response to the third authentication request. The third authentication request and the third authentication response may be similar to the first authentication request and the first authentication response and may be generated by the same or similar software, units, or the like. The third authentication response may be verified in the same manner as the first authentication response.

A communication channel may thus be established with the end user that is independent of the login session on the consumption device. Instructions may be given via this channel, e.g., to the end user. The instructions may be used to detect whether the consumption device seen by the MNO system is the same as that which the end user has in front of him. Interestingly, one can do this with a second authentication similar to the first authentication, optionally followed by registration of the device as an approved or trusted device. If a different device is detected, the MNO system has sufficient information to break off the authentication. **Figure 2b'** schematically shows an example of an embodiment of an authentication system 203. System 203 comprises a further service provider device 121. Further service provider device 121 may be under the control of MNO system 200. In an embodiment, the second authentication request may comprise a network address for a further Service Provider, e.g., a URL. For example, the further Service Provider may be a website. For example, system may be configured as follows:
- The end user may start an authentication sequence on consumption device 110 for service provider 120, which may result in sending an initiating authentication request to MNO system 200. This may yield a first device fingerprint from consumption device 110.
- MNO system 200 may instruct the end user through the authentication device 130 and the second authentication request to start a further authentication for the further service provider device 121. For example, the second authentication request may comprise the URL of the further service provider device 121, e.g., a URL. As a result of this action, a further initiating authentication request is sent to MNO system 200 from consumption device 110 this time for the further service provider. This will yield a second device fingerprint.
- MNO system 200 may verify that the first and second device fingerprints match to authenticate consumption device 110 or its user. In addition, MNO system 200 may verify the first and second authentication responses as well. MNO system 200 may register the device fingerprint as valid for that user. Interestingly, in this case a further initializing authentication request may be used as a second authentication response. For example, the first and second initiating authentication request may both contain a user identifier for the user. MNO system 200 may select for an incoming initiating authentication request for the further service provider the corresponding initiating authentication request by matching the user identifier.

In an embodiment, the further authentication is only done if MNO system 200 detects from the first fingerprint that device 110 not (yet) trusted, e.g., device 110 is a new device,

**Figure 2c** schematically shows an example of an embodiment of an authentication system 204. System 204 is similar to system 202, except for the addition of a discovery service system 140 running a discovery service responder 144. It may be the case that service provider 120 does not know to which MNO system 200 an authentication request should be sent. This may be resolved by discovery service system 140. The mobile network identifier entered by the user of device 110 log-in to service provider device 120 is sent to discovery service system 140. Discovery service responder 144 then looks up the correct MNO system 200. For example, the latter may be in the form of a URL. For example, Discovery service responder 144 may comprise a database associating mobile addresses to MNO systems. Depending on whether service provider 120 is a so-called trusted or non-trusted service provider, the mobile network identifier may be provided first to service provider 120 or provided directly to discovery service system 140 possibly via a re-direct.

In an embodiment, the redirect with the initiating authentication request to the MNO system 200 originates at discovery service system 140 and is passed onto consumption device 110, possibly via service provider device 120. Consumption device 110 then redirects to MNO system 200, possibly together with a fingerprint of the device 110, e.g., of the browser.

Without a redirect an initiating authentication request would come from a service provider and would be sent directly to the MNO system. When there is a redirect the consumption device gets in-between, so the initiating authentication request is sent to the consumption device, e.g., to a user agent on the consumption device, and from there to the MNO system. When there is a successful authentication, the authentication response may be sent to the service provider via the user agent on the consumption device.

For example, in an embodiment, the service provider device 120 may obtain the log-in screen from discovery service system 140. For example, in an embodiment, the service provider device 120 generates the log-in screen itself and presents it to consumption device 110. The consumption device is then redirected to the MNO system 200. There the initial authentication request is made. With the authentication success message, the consumption device may be returned to the service provider.

When the consumption device is redirected to the MNO system 200, the web page that is received, which may, e.g., be a waiting page, may comprise fingerprinting code, e.g., to obtain fingerprinting information from the consumption device and/or generate a fingerprint. Likewise, a page presented from the MNO system 200 to the consumption device 110 may comprise fingerprinting code

**Figure 3** schematically shows an example of an embodiment of an authentication database 300. Database 300 may be used in any of systems 100, 201, 202, 203, 204, e.g., as database 234. Database 300 comprises multiple records for multiple consumption devices, of which one record 310 is shown.

Record 310 may comprise a mobile network identifier 312. Record 310 may further comprise a fingerprint 311 of consumption device 110. For example, if an initiating authentication request is received for mobile network identifier 312 from a device with a fingerprint that matches fingerprint 311, the second authentication request may be omitted. If fingerprint 311 is missing, it may be added to a record after a successful authentication that includes a second authentication request.

Record 310 may comprise a mobile network identifier 312 of authentication device 130 and a user identifier 315. This information may be used to include the user identifier 315 in the authentication success message. The service provider device 120 may use user identifier 315 as an identifier within its own system, e.g., to maintain a user history, a profile, or the like.

Record 310 may comprise first authentication information 313. For example, first authentication unit 220 may record in first authentication information 313 that a first authentication is pending, e.g., that the first authentication request has been sent to authentication device 130. For example, if a challenge is used, the challenge may be recorded in first authentication information 313. When the first authentication response is received, the response may be verified with the first authentication information 313, e.g., by verifying that the response was received from mobile network identifier 312, and that a first authentication request has been sent according to first authentication information 313. Verifying may also comprise verifying a response to a challenge.

Record 310 may comprise second authentication information 314. For example, second authentication request unit 240 may record in second authentication information 314 that a second authentication is pending, e.g., that the second authentication request has been sent to authentication device 130. For example, the URL at which the second authentication response is expected may be stored in second authentication information 314. For example, if a random string was included, the string may be recorded in second authentication information 314. When the second authentication response is received, the response may be verified with the second authentication information 314, e.g., by verifying that a second authentication request has been sent according to second authentication information 314. For example, by verifying that the response was received at the correct URL, etc. For example, a fingerprint of the device that sent the initiating authentication request to MNO system 200, may be recorded in fingerprint 311. Verifying the second authentication response may comprise verifying that the fingerprint of the second authentication response matches, e.g., equals, the fingerprint stored in fingerprint 311. Verifying the second authentication response may also comprise verifying that the mobile network identifier 312 equals a mobile network identifier comprised in the second authentication response, e.g., as entered at consumption device 110.

Database 300 may record multiple fingerprints of multiple consumption devices for a single mobile network identifier. For example, a home and work consumption devices may be used together with the same authentication device.

When a new initiating authentication request comes in at MNO system 200, the database 300 may be consulted, e.g., by second authentication request unit 240 to see that the fingerprint corresponding to new initiating authentication request matches the fingerprint stored in fingerprint 311, and that a successful first and second authentication response has been received for a previous initiating authentication request. In that case, second authentication request unit 240 may decide to forego sending the second authentication request.

In all of the embodiments, the first authentication request may or may not be combined with the second authentication request. For example, in an embodiment, the second authentication request is sent after receiving a correct first authentication response. For example, in an embodiment, the first authentication request and the second authentication request are sent together in a single message. In an embodiment, the second authentication request is sent before the first authentication request.

**Figure 1b** schematically shows an example of an embodiment of a combined consumption and authentication device 110', e.g., wherein consumption device 110 and the authentication device 120 are the same device. Device 110' comprises a computer network interface 112, a mobile network interface 133, a processor 116 and a memory 118.

Computer network interface 112 is arranged for communicating with MNO system 200 over the computer network. If authentication is performed for a service provider 120, then computer network interface 112 may also be arranged for communicating with service provider device 120. Computer network interface 112 is arranged to send an initiating authentication request to MNO system 200, and later to send the second authentication response to MN system 200 in response to the second authentication request. For example, device 110' may be provided with first software arranged for sending initiating authentication request and the second authentication request. For example, the first software may be a web browser, an app, or the like. The first software may be configured to generate fingerprint information for device 110' and send it to MNO system 200, e.g., along with the initiating authentication request and the second authentication response. For example, if the first software is a web browser, then fingerprint generation code may be included in the web-page or pages that send the initiating authentication request and the second authentication request. It will be appreciated that the fingerprint information generated on the consumption device may be a fingerprint by itself, or may comprise fingerprint information that may be used by the server in generating a fingerprint.

Mobile network interface 133 is arranged for communicating with MNO system 200 over the mobile network. Mobile network interface 133 is arranged to receive the first authentication request, send the first authentication response and to receive the second authentication request. For example, device 110' may be provided with second software arranged for receiving the first authentication request, sending the first authentication response and receiving the second authentication request. For example, the second software may be system software, e.g., part of an operating system of device 110'. The second software may also be an app. The second software may be arranged to generate the first authentication response in response to the first authentication request. The second software may be arranged to display the second authentication response on a display of device 110' in response to the second authentication request. In response to displaying the request, a user of device 110' may operate the first software to cause it to send the second authentication response.

For example, an operating system of device 110' may be arranged to shield the first software from messages received by the second software from MNO system 200 over the mobile network interface. For example, only computer network message according to the computer network protocol may be forwarded to the first software, whereas messages according to a different mobile network protocol are not forwarded to the first software, but are forwarded to the second software.

It will be appreciated that the authentication process may be applied in an authentication system. For example, an embodiment of the authentication system comprises
- a computer network interface (212) for communicating with a consumption device over a computer network, and with an authentication device,
- a processor (216) configured to
   - receive an initiating authentication request from the consumption device over the computer network,
   - send a first authentication request to the authentication device and receive a first authentication response from the authentication device in response to the first authentication request,
   - send a second authentication request to the authentication device, the authentication device and the consumption device being operated for the consumption device to respond to the second authentication request with a second authentication response, the processor of the authentication system being configured to receive the second authentication response from the consumption device in response to the second authentication request,
   - verify the first authentication response and the second authentication response and verify that the second authentication response and the initiating authentication request were received from the same consumption device,
   - send an authentication success message.

The authentication system may be extended with further details as explained herein for the MNO operator system. For example, the authentication system may be employed by, say, a bank. Also in the authentication system may the authentication device and consumption device be the same device. For example, the device may have an app installed which causes the first authentication response. For example, such an embodiment does not require a mobile network interface, but may instead, e.g., use the internet for all communications.

In the various embodiments of the MNO system or authentication system, the device may have an additional interface for communicating. The additional interfaces may be selected from various alternatives. For example, the communication interface may be a network interface to a local or wide area network, e.g., the Internet, a storage interface to an internal or external data storage, a keyboard, an application interface (API), etc.

The MNO system may have a user interface, which may include well-known elements such as one or more buttons, a keyboard, display, touch screen, etc. The user interface may be arranged for accommodating user interaction for configuring, controlling, or starting authentication operations, etc. It is anticipated that once MNO system 200 started receiving and acting upon initiating authentication request, the process will run automatic, with no or little manual interaction with system 200. The devices 110, 120, 140, and 130 may also have a user interface.

Storage, e.g., the memories on devices 110, 120, 130, 140 and 200 or database 234, may be implemented as an electronic memory, say a flash memory, or magnetic memory, say hard disk or the like. Storage may comprise multiple discrete memories together making up the storage. Storage may comprise a temporary memory, say a RAM. In the case of a temporary storage, the storage may be associated with means to obtain data before use, say by obtaining them over a network connection.

Typically, the devices 110, 120, 130, 140 and 200 each comprise a microprocessor which executes appropriate software stored at the devices 110, 120, 130, 140 and 200; for example, that software may have been downloaded and/or stored in a corresponding memory, e.g., a volatile memory such as RAM or a non-volatile memory such as Flash. Alternatively, the devices 110, 120, 130, 140 and 200 may, in whole or in part, be implemented in programmable logic, e.g., as field-programmable gate array (FPGA). The devices 110, 120, 130, 140 and 200 may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL etc.

In an embodiment, MNO system 200 comprises one or more of a first authentication circuit, a fingerprint generator circuit, a fingerprint checker circuit, an authentication database circuit, a second authentication request circuit, and a second authentication verification circuit. The MNO system 200 may comprise additional circuits. The circuits implement the corresponding units described herein. The circuits may be a processor circuit and storage circuit, the processor circuit executing instructions represented electronically in the storage circuits.

A processor circuit may be implemented in a distributed fashion, e.g., as multiple sub-processor circuits. A storage may be distributed over multiple distributed sub-storages. Part or all of the memory may be an electronic memory, magnetic memory, etc. For example, the storage may have volatile and a non-volatile part. Part of the storage may be read-only. The circuits may also be, FPGA, ASIC or the like.

Embodiments of the invention provide protection against phishing using two band authentication in combination with consumption device detection and hidden user confirmation. Further embodiments and variants are described below.

Consider a user who is logging into a service, e.g., web site , mobile app, application or server, which requires an out-of-band authentication method. The user has a consumption device and an authentication device. These may be two distinct devices, but they may also coincide. The consumption device and the authentication device have a distinct communication channel, which may be used for out-of-band authentication.

Existing systems, even if employing out-of-band authentication, have a problem with phishing. Suppose the end user is attacked by a phisher, and is presented an imitation web site or app, or a fake web site or app on the consumption device. The end user is asked to enter his or her login credentials; the login credentials may be used by the phisher on a real web site, even if it requires an out-of-band authentication for logging in. Because of the simultaneous action, the user will be asked for an authentication on the authentication device. In case the end user does not pay attention, e.g., by not noticing that it's a different service or that it is an imitation, the end user may be tricked to carry out the authentication.

In an embodiment, a method for device and/or browser or context detection is added, e.g., to the implementation of the genuine service on the consumption device, etc., which can be used to recognize the device with sufficient uniqueness, and which generates a "fingerprint" of the device. The fingerprint information of the consumption device is communicated to the server; preferably, using a secure channel, e.g., protected with TLS, https, etc. The server stores in a database fingerprints of approved devices for this user. The server may comprise a fingerprint generator that generates a fingerprint based on fingerprint information (and possibly other information) received from the consumption device. Alternatively, the fingerprint information may comprise the fingerprint itself, and the server may store the fingerprint or parts thereof for later verification, i.e. for comparison to later received fingerprint information.

When the server detects that the devices is for the first time ever used by the end user as a consumption device, it may instruct the end user to carry out a number of actions; the instructions may be shown on the authentication device only, invisible to the phisher, who only sees the genuine consumption device. The instructions may include actions that can be detected by the service or server, but which are not noticeable to the phisher. For example, the instructions may be to open another browser window on the consumption device, e.g., enter the URL www.checkmydevice.kpn.nl, or the like, and enter a unique random code "34235" on this web site. The random code may be generated by the service or the server. The unique code is reported back to the server, as well as a fingerprint generated by www.checkmydevice.kpn.nl. By comparing the unique random code, and the fingerprints of the consumption device and the device which runs the 2^{nd} browser window, the server can know with whether a phishing situation is occurring. The fingerprints may comprise IP addresses. Instead of a fixed URL, a random URL may be used.

If it is successfully verified that the second authentication response and the initiating authentication request were received from the same consumption device, and/or that the second authentication response and/or the first authentication response are valid, then consumption device may be added to the list of trusted consumption devices. For example, the list of trusted consumption devices may be stored at the MNO system, e.g., related to each mobile network identifier or each authentication device. The MNO system may verify if a consumption devices is trusted, by virtue of being on the list. If a consumption device is trusted the second authentication may be omitted, or sent less frequently, or omitted for low-security services.

In an embodiment, the authentication device is used with an out-of-band authentication to keep a secure communications channel with the end user, in combination with device detection on the consumption device, and instructions communicated to the end user through the authentication device to perform actions on the consumption device that can reliably and uniquely detected by the server, but not by the phisher.

Below an embodiment is given for a real consumption device A, real service B, a real discovery site C, a real authentication device D that corresponds to real consumption device A, and a real MNO E:
- Consumption device A logs in with mobile network identifier of authentication device D, e.g., its phone number, on real site B.
- Real-site B sends authentication request to MNO site E via a redirect on consumption device A, possibly through the discovery site C.
- A fingerprint is obtained by the real MNO site E of real consumption device A
- MNO E sends a message to authentication device D. The user accepts the request on authentication device D. Send first authentication response to MNO system E.
- MNO E gives instructions to the end user to register consumption device A at MNO E.

End user executes the instructions; and device is detected. MNO E obtains a second fingerprint.
- If the fingerprints are the same, we know that it is not likely a phishing case. Device A can be added as a registered device. An authentication success message can be sent that redirects the consumption device A to the real site.
- If the fingerprints are different, then likely the devices are different, and an alarm may go off and the authentication fails.

Below the same scenario is presented in the presence of fake consumption device A', fake service B', a fake discovery site C', and a fake MNO E'. The user of consumption device A and authentication device D does not see the difference with the real sites.
- Consumption device 110 logs in with mobile network identifier of authentication device 130, e.g., its phone number, on a fake site B'.
- Fake site B' may also show consumption device A a fake discovery site C', and a fake MNO E. Consumption device 110 only sees fake sites, but user thinks he/she is looking at the real site.
- Phisher logs in as fake user with mobile network identifier of the real user on real site B
- Real site B sends discovery request to Discovery service C (if any)
   o Discovery service answers to real site B with a redirect. The redirect of discovery service contains site address of the correct MNO (where the authentication has to take place)
- Real-site sends authentication request to MNO site as a redirect through the fake consumption device A'. MNO obtains a first fingerprint of fake consumption device A' (*)
- MNO E sends a first authentication request to a real-authentication device D. Real-customer accepts request.
- MNO compares fingerprint of Consumption device 110 of previously approved devices
- Fingerprint is not stored with previously approved devices
- MNO gives instructions (e.g., the second authentication request) to the end user to register consumption device A, via a communication channel that the fake site B' does not see. This can be done, for example, by giving instructions on the mobile phone. The actions that the end user must do on the consumption device A trigger a second device detection, which can only be detected by the correct MNO. This can be, for example, opening a second browser screen, and going to a specific URL where the device is detected.
- End user executes the instructions, MNO obtains a second fingerprint of the real consumption device A. The fingerprints do not match, and the authentication fails.

The attacker could have chosen a different route at the step marked with (*). Instead of executing the redirect on this own fake consumption device A', he could have send the redirect on to the real consumption device A. This may avoid detection of the fakery by MNO E, but the eventual authentication success message would redirect consumption device A to real site B, away from fake site B'; so this variant does not work for the phisher either.

**Figure 4** schematically shows an example of an embodiment of an authentication method 400. Method 400 comprises
- establishing (410) communication with a consumption device over a computer network,
- establishing (420) communication with an authentication device, the authentication device having a mobile network identifier,
- receiving (430) an initiating authentication request from the consumption device over the computer network, the initiating authentication request comprising the mobile network identifier,
- sending (440) a first authentication request to the authentication device with the mobile network identifier and receive a first authentication response from the authentication device in response,
- sending (450) a second authentication request to the authentication device with the mobile network identifier and receive a second authentication response from the consumption device in response,
- verifying (460) the first authentication response and the second authentication response and verify that the second authentication response and the initiating authentication request were received from the same consumption device,
- sending (470) an authentication success message.

Many different ways of executing the method are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. For example, steps 440 and 450 may be executed, at least partially, in parallel, or even together in a single step, e.g., as a single message. Moreover, a given step may not have finished completely before a next step is started.

Embodiments of the method may be executed using software, which comprises instructions for causing a processor system to perform method 400. Software may only include those steps taken by a particular sub-entity of the system. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. Embodiments of the method may be executed using a bitstream arranged to configure programmable logic, e.g., a field-programmable gate array (FPGA), to perform the method.

It will be appreciated that the invention also extends to computer programs, particularly computer programs on or in a carrier, adapted for putting the invention into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

**Figure 5a** shows a computer readable medium 1000 having a writable part 1010 comprising a computer program 1020, the computer program 1020 comprising instructions for causing a processor system to perform an MNO method, according to an embodiment. The computer program 1020 may be embodied on the computer readable medium 1000 as physical marks or by means of magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said MNO method.

**Figure 5b** shows in a schematic representation of a processor system 1140 according to an embodiment. The processor system comprises one or more integrated circuits 1110. The architecture of the one or more integrated circuits 1110 is schematically shown in Figure 5b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

For example, in an embodiment, processor system 1140, e.g., an MNO system, e.g., an MNO device, may comprise a processor circuit and a memory circuit, the processor being arranged to execute software stored in the memory circuit. For example, the processor circuit may be an Intel Core i7 processor, ARM Cortex-R8, etc. The memory circuit may be an ROM circuit, or a non-volatile memory, e.g., a flash memory. The memory circuit may be a volatile memory, e.g., an SRAM memory. In the latter case, the device may comprise a non-volatile software interface, e.g., a hard drive, a network interface, etc., arranged for providing the software.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claim.

## Claims

1. A mobile network operator system (MNO system; 200) for authenticating a consumption device, the MNO system comprising
- a computer network interface (212) for communicating with the consumption device over a computer network,
- a mobile network interface (213) for communicating with the authentication device, the authentication device having a mobile network identifier,
- a processor (216) configured to
- receive an initiating authentication request from the consumption device over the computer network, the initiating authentication request comprising the mobile network identifier,
- send a first authentication request to the authentication device associated with the mobile network identifier and receive a first authentication response from the authentication device in response to the first authentication request,
- send a second authentication request to the authentication device associated with the mobile network identifier, wherein the second authentication request comprises an MNO computer network address,
- receive a second authentication response from the consumption device at the MNO computer network address in response to a user interaction with the consumption device in response to receiving the second authentication request at the authentication device,
- verify the first authentication response and the second authentication response and verify that the second authentication response and the initiating authentication request were received from the same consumption device,
- send an authentication success message comprising an authentication token.

2. The MNO system as in any one of the preceding claims, wherein the second authentication response is sent in response to a user opening a web-page following instructions in the second authentication request.

3. The MNO system as in any one of the preceding claims, comprising a database associating mobile network identifiers with device fingerprints of consumption devices, the processor being configured to
- verify if a device fingerprint is currently associated with the mobile network identifier upon receiving the initiating authentication request, and, if not, sending the second authentication request indicating that a second authentication response is needed from the consumption device for authentication.

4. The MNO system as in any one of the preceding claims, wherein the authentication success message is sent if the first authentication response is successfully verified and a device fingerprint is currently associated with the mobile network identifier, without sending the second authentication request.

5. The MNO system as in any one of the preceding claims, wherein the database further associates the mobile network identifier with a user identifier, and wherein the authentication success message comprises the user identifier.

6. The MNO system as in any one of the preceding claims, wherein verifying that the second authentication response and the initiating authentication request were received from the same consumption device comprises matching a device fingerprint obtained from the second authentication response to a device fingerprint obtained from the initiating authentication request.

7. The MNO system as in any one of the preceding claims, wherein the initiating authentication request is redirected by the consumption device from a service provider device to the mobile network system.

8. The MNO system as in any one of the preceding claims, wherein the MNO system is configured to send a web-page to the consumption device to obtain fingerprint information for the second authentication response and/or the initiating authentication request, the web-page comprising fingerprinting code executable by a web browser of the consumption device, the fingerprinting code generating the fingerprint information.

9. The MNO system as in any one of the preceding claims, wherein the processor is configured to
- generate random data
- include the random data in the second authentication request, and
- verify that the second authentication response comprises the random data.

10. The MNO system as in any one of the preceding claims, wherein the processor is configured to
- send a third authentication request to the authentication device associated with the mobile network identifier in response to receiving the second authentication response, and to receive a third authentication response from the authentication device in response to the third authentication request,
- verify the third authentication response before sending the authentication success message.

11. A mobile network operator method (400) for authenticating a consumption device, the MNO method comprising
- establishing (410) communication with the consumption device over a computer network,
- establishing (420) communication with an authentication device, the authentication device having a mobile network identifier,
- receiving (430) an initiating authentication request from the consumption device over the computer network, the initiating authentication request comprising the mobile network identifier,
- sending (440) a first authentication request to the authentication device associated with the mobile network identifier and receive a first authentication response from the authentication device in response,
- sending (450) a second authentication request to the authentication device associated with the mobile network identifier, wherein the second authentication request comprises an MNO computer network address,
- receiving a second authentication response from the consumption device at the MNO computer network address in response to a user interaction with the consumption device in response to receiving the second authentication request at the authentication device,
- verifying (460) the first authentication response and the second authentication response and verify that the second authentication response and the initiating authentication request were received from the same consumption device,
- sending (470) an authentication success message comprising an authentication token.

12. A computer readable medium (1000) comprising transitory or non-transitory data (1020) representing instructions to cause a processor system to perform the method according to claim 11.

## Patentansprüche

1. Mobilfunknetzbetreibersystem (Mobil Network Operator system, MNO-System; 200) zum Authentifizieren einer Verbrauchsvorrichtung, wobei das MNO-System umfasst:
- eine Computernetzwerkschnittstelle (212) zum Kommunizieren mit der Verbrauchsvorrichtung über ein Computernetzwerk,
- eine Mobilfunknetzwerkschnittstelle (213) zum Kommunizieren mit der Authentifizierungsvorrichtung, wobei die Authentifizierungsvorrichtung eine Mobilfunknetzwerkkennung aufweist,
- einen Prozessor (216), der konfiguriert ist zum:
- Empfangen einer anfänglichen Authentifizierungsanfrage von der Verbrauchsvorrichtung über das Computernetzwerk, wobei die anfängliche Authentifizierungsanfrage die Mobilfunknetzwerkkennung umfasst,
- Senden einer ersten Authentifizierungsanfrage an die Authentifizierungsvorrichtung, zu der die Mobilfunknetzwerkkennung zugeordnet ist, und Empfangen einer ersten Authentifizierungsantwort von der Authentifizierungsvorrichtung als Reaktion auf die erste Authentifizierungsanfrage,
- Senden einer zweiten Authentifizierungsanfrage an die Authentifizierungsvorrichtung, zu der die Mobilfunknetzwerkkennung zugeordnet ist, wobei die zweite Authentifizierungsanfrage eine MNO-Computernetzwerkadresse umfasst,
- Empfangen einer zweiten Authentifizierungsantwort von der Verbrauchsvorrichtung in der MNO-Computernetzwerkadresse als Reaktion auf eine Benutzerinteraktion mit der Verbrauchsvorrichtung als Reaktion auf ein Empfangen der zweiten Authentifizierungsanfrage in der Authentifizierungsvorrichtung,
- Verifizieren der ersten Authentifizierungsantwort und der zweiten Authentifizierungsantwort und Verifizieren, dass die zweite Authentifizierungsantwort und die anfängliche Authentifizierungsanfrage von der gleichen Verbrauchsvorrichtung empfangen wurden, Senden einer Authentifizierungserfolgsnachricht, die ein Authentifizierungstoken umfasst.

2. MNO-System nach einem der vorhergehenden Ansprüche, wobei die zweite Authentifizierungsantwort als Reaktion darauf gesendet wird, dass ein Benutzer eine Webseite öffnet, indem Anweisungen in der zweiten Authentifizierungsanfrage befolgt werden.

3. MNO-System nach einem der vorhergehenden Ansprüche, das eine Datenbank umfasst, die Mobilfunknetzwerkkennungen zu Vorrichtungsfingerprints von Verbrauchsvorrichtungen zuordnet, wobei der Prozessor konfiguriert ist zum
- Verifizieren, ob, nach dem Empfangen der anfänglichen Authentifizierungsanfrage, einem Vorrichtungsfingerprint die Mobilfunknetzwerkkennung aktuell zugeordnet ist, und, falls nicht, Senden der zweiten Authentifizierungsanfrage, die anzeigt, dass eine zweite Authentifizierungsantwort von der Verbrauchsvorrichtung für eine Authentifizierung erforderlich ist.

4. MNO-System nach einem der vorhergehenden Ansprüche, wobei die Authentifizierungserfolgsnachricht gesendet wird, wenn die erste Authentifizierungsantwort erfolgreich verifiziert wurde und einem Vorrichtungsfingerprint die Mobilfunknetzwerkkennung aktuell zugeordnet ist, ohne die zweite Authentifizierungsanfrage zu senden.

5. MNO-System nach einem der vorhergehenden Ansprüche, wobei die Datenbank die Mobilfunknetzwerkkennung außerdem einer Benutzerkennung zuordnet und wobei die Authentifizierungserfolgsnachricht die Benutzerkennung umfasst.

6. MNO-System nach einem der vorhergehenden Ansprüche, wobei das Verifizieren, dass die zweite Authentifizierungsantwort und die anfängliche Authentifizierungsanfrage von der gleichen Verbrauchsvorrichtung empfangen wurden, ein Abgleichen eines Vorrichtungsfingerprints, der von der zweiten Authentifizierungsantwort erhalten wurde, mit einem Vorrichtungsfingerprint umfasst, der von der anfänglichen Authentifizierungsanfrage erhalten wurde.

7. MNO-System nach einem der vorhergehenden Ansprüche, wobei die anfängliche Authentifizierungsanfrage durch die Verbrauchsvorrichtung von einer Dienstanbietervorrichtung zu dem Mobilfunknetzwerksystem umgeleitet wird.

8. MNO-System nach einem der vorhergehenden Ansprüche, wobei das MNO-System konfiguriert ist zum Senden einer Webseite zu der Verbrauchsvorrichtung, um Fingerprintinformationen für die zweite Authentifizierungsantwort und/oder die anfängliche Authentifizierungsanfrage zu erhalten, wobei die Webseite einen Fingerprintcode umfasst, der durch einen Webbrowser der Verbrauchsvorrichtung ausführbar ist, wobei der Fingerprintcode die Fingerprintinformationen erzeugt.

9. MNO-System nach einem der vorhergehenden Ansprüche, wobei der Prozessor konfiguriert ist zum:
- Erzeugen von Zufallsdaten;
- Einfügen der Zufallsdaten in die zweite Authentifizierungsanfrage, und
- Verifizieren, dass die zweite Authentifizierungsantwort die Zufallsdaten umfasst.

10. MNO-System nach einem der vorhergehenden Ansprüche, wobei der Prozessor konfiguriert ist zum:
- Senden einer dritten Authentifizierungsanfrage an die Authentifizierungsvorrichtung, zu der die Mobilfunknetzwerkkennung zugeordnet ist, als Reaktion auf ein Empfangen der zweiten Authentifizierungsantwort, und zum Empfangen einer dritten Authentifizierungsantwort von der Authentifizierungsvorrichtung als Reaktion auf die dritte Authentifizierungsanfrage,
- Verifizieren der dritten Authentifizierungsantwort, bevor die Authentifizierungserfolgsnachricht gesendet wird.

11. Mobilfunknetzbetriebsverfahren (400) zum Authentifizieren einer Verbrauchsvorrichtung, wobei das MNO-Verfahren umfasst:
- Einrichten (410) einer Kommunikation mit der Verbrauchsvorrichtung über ein Computernetzwerk,
- Einrichten (420) einer Kommunikation mit einer Authentifizierungsvorrichtung, wobei die Authentifizierungsvorrichtung eine Mobilfunknetzwerkkennung aufweist,
- Empfangen (430) einer anfänglichen Authentifizierungsanfrage von der Verbrauchsvorrichtung über das Computernetzwerk, wobei die anfängliche Authentifizierungsanfrage die Mobilfunknetzwerkkennung umfasst,
- Senden (440) einer ersten Authentifizierungsanfrage an die Authentifizierungsvorrichtung, zu der die Mobilfunknetzwerkkennung zugeordnet ist, und Empfangen als Antwort einer ersten Authentifizierungsantwort von der Authentifizierungsvorrichtung,
- Senden (450) einer zweiten Authentifizierungsanfrage an die Authentifizierungsvorrichtung, zu der die Mobilfunknetzwerkkennung zugeordnet ist, wobei die zweite Authentifizierungsanfrage eine MNO-Computernetzwerkadresse umfasst,
- Empfangen einer zweiten Authentifizierungsantwort von der Verbrauchsvorrichtung in der MNO-Computernetzwerkadresse als Reaktion auf eine Benutzerinteraktion mit der Verbrauchsvorrichtung als Reaktion auf ein Empfangen der zweiten Authentifizierungsanfrage in der Authentifizierungsvorrichtung,
- Verifizieren (460) der ersten Authentifizierungsantwort und der zweiten Authentifizierungsantwort und Verifizieren, dass die zweite Authentifizierungsantwort und die anfängliche Authentifizierungsanfrage von der gleichen Verbrauchsvorrichtung empfangen wurden,
- Senden (470) einer Authentifizierungserfolgsnachricht, die ein Authentifizierungstoken umfasst.

12. Computerlesbares Medium (1000), das flüchtige oder nicht-flüchtige Daten (1020) umfasst, die Befehle zum Veranlassen eines Prozessorsystems repräsentieren, das Verfahren nach Anspruch 11 auszuführen.

## Revendications

1. Système d'opérateur de réseau mobile (système MNO ; 200) destiné à authentifier un dispositif consommateur, le système MNO comprenant
- une interface de réseau informatique (212) pour communiquer avec le dispositif consommateur sur un dispositif informatique,
- une interface de réseau mobile (213) pour communiquer avec le dispositif d'authentification, le dispositif d'authentification possédant un identifiant de réseau mobile,
- un processeur (216) configuré pour
- recevoir une requête de lancement d'authentification à partir du dispositif consommateur sur le réseau informatique, la requête de lancement d'authentification comprenant l'identifiant de réseau mobile,
- envoyer une première requête d'authentification au dispositif d'authentification associé à l'identifiant de réseau mobile et recevoir une première réponse d'authentification à partir du dispositif d'authentification en réponse à la première demande d'authentification,
- envoyer une deuxième requête d'authentification associée à l'identifiant de réseau mobile, la deuxième requête d'authentification comprenant une adresse de réseau informatique MNO,
- recevoir une deuxième réponse d'authentification du dispositif consommateur à l'adresse de réseau informatique MNO en réponse à une interaction d'utilisateur avec le dispositif consommateur en réponse à la réception de la deuxième requête d'authentification au niveau du dispositif d'authentification,
- vérifier la première réponse d'authentification et la deuxième réponse d'authentification et vérifier que la deuxième réponse d'authentification et la requête de lancement d'authentification ont été reçues à partir du même dispositif consommateur,
- envoyer un message de réussite d'authentification comprenant un jeton d'authentification.

2. Système MNO selon l'une quelconque des revendications précédentes, dans lequel la deuxième réponse d'authentification est envoyée en réponse à l'ouverture par un utilisateur d'une page Web selon des instructions comprises dans la deuxième requête d'authentification.

3. Système MNO selon l'une quelconque des revendications précédentes, comprenant une base de données associant des identifiants de réseau mobile à des empreintes numériques de dispositifs consommateurs, le processeur étant configuré pour
- vérifier qu'une empreinte numérique de dispositif est présentement associée à l'identifiant de réseau mobile à la réception de la requête de lancement d'authentification, et dans la négative envoyer la deuxième requête d'authentification indiquant qu'une deuxième réponse d'authentification est requise du dispositif consommateur pour l'authentification.

4. Système MNO selon l'une quelconque des revendications précédentes, dans lequel le message de réussite d'authentification est envoyé si la première réponse d'authentification est vérifiée avec succès et une empreinte numérique de dispositif est présentement associée à l'identifiant de réseau mobile, sans envoyer la deuxième requête d'authentification.

5. Système MNO selon l'une quelconque des revendications précédentes, dans lequel la base de données associe en outre l'identifiant de réseau mobile à un identifiant d'utilisateur, et le message de réussite d'authentification comprend l'identifiant d'utilisateur.

6. Système MNO selon l'une quelconque des revendications précédentes, dans lequel la vérification que la deuxième réponse d'authentification et la requête de lancement d'authentification ont été reçues à partir du même dispositif consommateur comprend la mise en correspondance d'une empreinte numérique de dispositif obtenue à partir de la deuxième réponse d'authentification avec une empreinte numérique de dispositif obtenue à partir de la requête de lancement d'authentification.

7. Système MNO selon l'une quelconque des revendications précédentes, dans lequel la requête d'authentification de lancement est redirigée par le dispositif consommateur d'un dispositif de fournisseur de réseau vers le système de réseau mobile.

8. Système MNO selon l'une quelconque des revendications précédentes, dans lequel le système MNO est configuré pour envoyer une page Web au dispositif consommateur pour obtenir des informations d'empreinte numérique pour la deuxième réponse d'authentification et/ou la requête de lancement d'authentification, la page Web comprenant un code de définition d'empreinte numérique exécutable par un navigateur Internet du dispositif consommateur, le code de définition d'empreinte numérique générant les informations d'empreinte.

9. Système MNO selon l'une quelconque des revendications précédentes, dans lequel le processeur est configuré pour
- générer des données aléatoires
- inclure les données aléatoires dans la deuxième requête d'authentification, et
- vérifier que la deuxième réponse d'authentification comprend les données aléatoires.

10. Système MNO selon l'une quelconque des revendications précédentes, dans lequel le processeur est configuré pour
- envoyer une troisième requête d'authentification au dispositif d'authentification associé à l'identifiant de réseau mobile en réponse à la réception de la deuxième réponse d'authentification, et recevoir une troisième réponse d'authentification à partir du dispositif d'authentification en réponse à la troisième requête d'authentification,
- vérifier la troisième réponse d'authentification avant l'envoi du message de réussite d'authentification.

11. Procédé d'opérateur de réseau mobile (400) destiné à authentifier un dispositif consommateur, le procédé MNO comprenant
- l'établissement (410) d'une communication avec le dispositif consommateur sur un réseau informatique,
- l'établissement (420) d'une communication avec un dispositif d'authentification, le dispositif d'authentification possédant un identifiant de réseau mobile,
- la réception (430) d'une requête de lancement d'authentification à partir du dispositif consommateur sur le réseau informatique, la requête d'authentification de lancement comprenant l'identifiant de réseau mobile,
- l'envoi (440) d'une première requête d'authentification au dispositif d'authentification associé à l'identifiant de réseau mobile et la réception en réponse d'une première réponse d'authentification du dispositif d'authentification,
- l'envoi (450) d'une deuxième requête d'authentification au dispositif d'authentification associé à l'identifiant de réseau mobile, la deuxième requête d'authentification comprenant une adresse de réseau informatique MNO,
- la réception d'une deuxième réponse d'authentification à partir du dispositif consommateur à l'adresse de réseau informatique MNO en réponse à une interaction d'utilisateur avec le dispositif consommateur en réponse à la réception de la deuxième requête d'authentification au niveau du dispositif d'authentification,
- la vérification (460) de la première réponse d'authentification et de la deuxième réponse d'authentification et la vérification que la deuxième réponse d'authentification et la requête de lancement d'authentification ont été reçues à partir du même dispositif consommateur,
- l'envoi (470) d'un message de réussite d'authentification comprenant un jeton d'authentification.

12. Support lisible par ordinateur (1000) comprenant des données transitoires ou non transitoires (1020) représentant des instructions pour amener un système de processeur à réaliser le procédé selon la revendication 11.
